(19) Europäisches Patentamt
European Patent Office
Office européen des brevets

(11) Veröffentlichungsnummer: **0 405 266 B1**

(12) # EUROPÄISCHE PATENTSCHRIFT

(45) Veröffentlichungstag der Patentschrift: **16.02.94**

(51) Int. Cl.⁵: **C08F 8/04**

(21) Anmeldenummer: **90111390.2**

(22) Anmeldetag: **16.06.90**

(54) **Hydrierung nitrilgruppenhaltiger ungesättigter Polymerer.**

(30) Priorität: **29.06.89 DE 3921264**

(43) Veröffentlichungstag der Anmeldung:
**02.01.91 Patentblatt 91/01**

(45) Bekanntmachung des Hinweises auf die Patenterteilung:
**16.02.94 Patentblatt 94/07**

(84) Benannte Vertragsstaaten:
**DE FR GB IT**

(56) Entgegenhaltungen:
**EP-A- 0 174 576**
**EP-A- 0 213 422**
**EP-A- 0 224 139**
**EP-A- 0 298 386**
**FR-A- 2 254 586**
**US-A- 3 454 644**
**US-A- 4 656 230**

(73) Patentinhaber: **BAYER AG**

**D-51368 Leverkusen(DE)**

(72) Erfinder: **Buding, Hartmuth, Dr.**
**Liebermannstrasse 1**
**D-4047 Dormagen 1(DE)**
Erfinder: **Thörmer, Joachim, Dr.**
**Emil-Nolde-Strasse 39**
**D-5090 Leverkusen 1(DE)**
Erfinder: **Nolte, Wilfried, Dr.**
**Im Alten Driesch 18**
**D-5068 Odenthal(DE)**
Erfinder: **Hohn, Johann, Dr.**
**Mozartstrasse 12**
**D-4047 Dormagen(DE)**
Erfinder: **Fiedler, Paul-Christian, Dr.**
**Rybniker-Strasse 8**
**D-5000 Koeln 80(DE)**
Erfinder: **Himmler, Thomas, Dr.**
**Bonhoefferstrasse 20**
**D-5000 Koeln 80(DE)**

EP 0 405 266 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur selektiven Hydrierung nitrilgruppenhaltiger olefinisch ungesättigter Polymerer mit Wasserstoff in Gegenwart von Hydrierkatalysatoren in organischen Lösungsmitteln. Unter "selektiver Hydrierung" wird im Sinne der Erfindung die Hydrierung der olefinischen CC-Doppelbindungen unter Erhalt der CN- Dreifachbindungen verstanden. "Unter Erhalt der CN-Dreifachbindungen" bedeutet in diesem Zusammenhang, daß weniger als 7, vorzugsweise weniger als 5, insbesondere weniger als 3 und speziell weniger als 1,5 % der ursprünglich vorhandenen Nitrilgruppen des polymeren Ausgangsprodukts hydriert werden.

Die US-PS 3 700 637 beschreibt die Hydrierung der CC-Doppelbindungen von Dien/(Meth)Acrylnitril-Copolymerisaten homogen mit Rhodiumhalogenkomplexkatalysatoren in Chlorbenzol. Die Eignung anderer Metalle wie Platin, Ruthenium, Iridium, Palladium, Rhenium, Kobalt oder Kupfer, homogen oder heterogen, wird angedeutet.

In der DE-OS 2 539 132 wird eine selektive Hydrierung von Butadien/Acrylnitril-Copolymerisaten mit den gleichen und ähnlichen Rhodiumkatalysatoren beschrieben, bei der die CN-Dreifach-und cis-Doppelbindungen erhalten bleiben und die vinylischen und trans-Doppelbindungen quantitativ hydriert werden, wenn Chlorbenzol als Lösungsmittel verwendet wird. In anderen Lösungsmitteln, insbesondere Ketonen, werden nur niedrige Hydriergrade erzielt.

In der EP-PS 134 023 wird die selektive Hydrierung von Nitrilkautschuk mit geringen Mengen an Rhodiumkomplexverbindungen und bis zu 2 Gew.-% Triphenylphosphan beansprucht.

Da die Rhodiumvorkommen sehr klein und Rhodium nicht nur in der chemischen Industrie, sondern überwiegend in der Elektroindustrie, in der Glas- und Keramikindustrie und in jüngster Zeit ganz besonders in der Automobilindustrie (Abgaskatalysatoren) eingesetzt wird, ist eine Verknappung dieses Edelmetalls in Zukunft nicht auszuschließen. Man hat deshalb schon in der Vergangenheit nach von Rhodiumkatalysatoren unabhängigen Hydrierverfahren gesucht. An Vorschlägen hat es nicht gemangelt.

In der DE-OS 33 37 294 wird ein Hydrierverfahren für Olefine mit Ruthenium-Cyclopentadienylkomplexen in organischen Lösungsmitteln, wie z.B. Toluol, 2-Propanol oder Butanon beschrieben.

Aus der DE-OS 35 41 689 ist ein Verfahren für die selektive Hydrierung nitrilgruppenhaltiger olefinisch ungesättigter Polymerer mit Ruthenium-Indenylkomplexen in Ketonen als Lösungsmittel bekannt.

Die DE-OS 35 40 918 beschreibt die selektive Hydrierung von nitrilgruppenhaltigen Olefinen mit Rutheniumhydridophosphankomplexen in Ketonen als Lösungsmittel.

Die EP 298 386 offenbart die Hydrierung von CC-Doppelbindungen in Copolymerisaten aus konjugierten Dienen mit Ruthenium-CO- und/oder -NO-Komplexen in organischen Lösungsmitteln, wie z.B. Benzol, Toluol, Xylol, Chlorbenzol, Dichlorbenzol, Ethern und Ketonen.

Die DE-OS 35 29 252 betrifft die selektive Hydrierung nitrilgruppenhaltiger olefinisch ungesättigter Verbindungen mit Rutheniumhydridocarboxylatokomplexen in Ketonen als Lösungsmittel.

Von Wilkinson et al., J. Chem. Soc. (A) 3143 (1968), wird über die Verwendung von Tris-(triphenylphosphan)ruthenium-(II)-chlorid in Benzol/Ethanol-Lösungen als Hydrierkatalysator für Olefine berichtet. Wird in dem Lösungsmittel Ethanol gegen Methanol, tert.-Butanol oder 2-Propanol ausgetauscht, so soll das Hydrierergebnis variieren. Chlorbenzol sowie auch reine Alkohole sollen als Lösungsmittel ebenfalls anwendbar sein.

In der DE-OS 3 433 392 wird ein Verfahren zur selektiven Hydrierung von nitrilgruppenhaltigen olefinisch ungesättigten Polymeren mit Ruthenium-Komplexkatalysatoren beschrieben, wobei ein niedermolekulares Keton als Lösungsmittel verwendet wird. Die in der DE-OS 3 433 392 enthaltene Beispiele zeigen jedoch, daß mit Rutheniumkomplexkatalysatoren in Chlorbenzol, welches nach Stand der Technik ein geeignetes Lösungsmittel für die Hydrierung von nitrilgruppenhaltigen olefinisch ungesättigten Polymeren ist, Produkte mit hohen Gelanteilen erhalten werden.

Aus den gemäß dem Stand der Technik hydrierten nitrilgruppenhaltigen olefinisch ungesättigten Polymeren können durch Vulkanisation hochwertige Gummiartikel, wie z.B. Dichtungen, hergestellt werden. Für ganz spezielle Anwendungen im Dichtungssektor, wo besonders gute Druckverformungsreste der Vulkanisate erforderlich sind, sind diese Polymeren aber nicht immer ausreichend. Der Druckverformungsrest ist ein wesentliches Prüfkriterium für viele Gummiartikel wie z.B Schläuche, Dichtungen und Manschetten.

Aufgabe der vorliegenden Erfindung war es also, Vulkanisate von mit Rutheniumkatalysatoren hydrierten nitrilgruppenhaltigen olefinisch ungesättigten Polymeren zugänglich zu machen, die einen verbesserten Druckverformungsrest aufweisen.

Überraschenderweise wurde gefunden, daß die Bedingungen des Hydrierverfahrens einen Einfluß auf den Druckverformungsrest der Vulkanisate dieser Hydrierungsprodukte ausüben können und daß insbesondere die Art des verwendeten Lösungsmittels den Druckverformungsrest dieser Vulkanisate mitbestimmt.

Gegenstand der Erfindung ist ein Verfahren zur selektiven Hydrierung nitrilgruppenhaltiger olefinisch ungesättigter Polymerer mit Wasserstoff in Gegenwart von Hydrierkatalysator in organischem Lösungsmittel,

dadurch gekennzeichnet, daß man

(i) als Hydrierkatalysator eine Rutheniumverbindung der Formel

$RuX_{2y} [(L^1)_n (L^2)_{5-z}]$ (I)

worin

X Wasserstoff, Halogen, $SnCl_3$,

$L^1$ Wasserstoff, Halogen, $(R^6\text{-COO})_n$ und Cyclopentadienyl der Formel

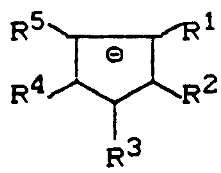

in der $R^1$ bis $R^5$ unabhängig voneinander für Wasserstoff, Methyl, Ethyl oder Phenyl stehen, wobei auch benachbarte Substituenten gemeinsam einen Kohlenwasserstoffrest derart bilden können, daß $L^1$ ein Indenyl- oder Fluorenylsystem ist,

$L^2$ ein Phosphan, Bisphosphan oder Arsan und

y Null, 0,5 oder 1,

n 1 oder 2,

z eine ganze Zahl von 1 bis 4,

$R^6$ Alkyl, Cycloalkyl, Aryl oder Aralkyl mit 1 bis 20 C-Atomen

bedeuten, und

(ii) als Lösungsmittel eine Mischung aus

a) $C_3$-$C_6$-Keton und

b) einwertigem sekundärem oder tertiärem $C_3$-$C_6$-Alkohol verwendet, wobei der Gewichtsanteil von b) am Lösungsmittel (ii) 2 bis 60, vorzugsweise 5 bis 50, insbesondere 7 bis 40, % beträgt.

Beispiele für $L^1$-Liganden vom Typ Cyclopentadienyl umfassen Cyclopentadienyl, Pentamethylcyclopentadienyl, Ethyltetramethylcyclopentadienyl, Pentaphenylcyclopentadienyl, Dimethyltriphenylcyclopentadienyl, Indenyl und Fluorenyl. Die Benzoringe in den $L^1$-Liganden vom Indenyl- und Fluorenyl-Typ können durch Alkylreste mit 1 bis 6 C- Atomen, insbesondere Methyl, Ethyl und Isopropyl, Alkoxyreste mit 1 bis 4 C-Atomen, insbesondere Methoxy und Ethoxy, Arylreste, insbesondere Phenyl, und Halogene, insbesondere Fluor und Chlor, substituiert sein. Bevorzugte $L^1$-Liganden vom Typ Cyclopentadienyl sind die jeweils unsubsituierten Reste Cyclopentadienyl, Indenyl und Fluorenyl.

Im Liganden $L^1$ vom Typ $(R^6 \cdot COO)_n$ umfaßt $R^6$ beispielsweise geradkettige oder verzweigte, gesättigte Kohlenwasserstoffreste mit 1 bis 20, bevorzugt 1 bis 12, insbesondere 1 bis 6 C-Atomen, cyclische, gesättigte Kohlenwasserstoffreste mit 5 bis 12, bevorzugt 5 bis 7 C-Atomen, aromatische Kohlenwasserstoffreste aus der Benzolreihe mit 6 bis 18, bevorzugt 6 bis 10 C-Atomen, Aryl substituierte Alkylreste, die im aliphatischen Teil aus einem geradkettigen oder verzweigten Kohlenwasserstoffrest mit 1 bis 6 C-Atomen und im aromatischen Teil aus einem Rest der Benzolreihe, vorzugsweise Phenyl, bestehen.

Die vorstehend erläuterten Reste $R^6$ können gegebenenfalls durch Hydroxy, $C_1$-$C_6$-Alkoxy, $C_1$-$C_6$-Carbalkoxy, Fluor, Chlor oder Di-$C_1$-$C_4$-alkylamino substituiert sein, die Cycloalkyl-, Aryl- und Aralkylreste darüber hinaus durch $C_1$- bis $C_6$-Alkyl. Alkyl-, Cycloalkyl- und Aralkylgruppen können Ketogruppen enthalten.

Beispiele für den Rest $R^6$ sind Methyl, Ethyl, Propyl, iso-Propyl, tert.-Butyl, Cyclohexyl, Phenyl, Benzyl und Trifluormethyl. Bevorzugte Reste $R^6$ sind Methyl, Ethyl und tert.-Butyl.

Bevorzugte $L^2$-Liganden sind Phosphane und Arsane der Formeln

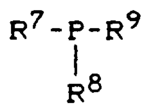 und 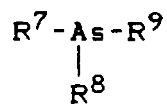

(II) (III) ,

in denen $R^7$, $R^8$ und $R^9$ unabhängig voneinander der Bedeutung von $R^6$ entsprechen.

Bevorzugte $L^2$-Liganden der Formeln (II) und (III) sind Triphenylphosphan, Diethylphenylphosphan, Tritolylphosphan, Trinaphthylphosphan, Diphenylmethylphosphan, Diphenylbutylphosphan, Tris-(p-carbmethoxyphenyl)-phosphan, Tris-(p-cyanophenyl)-phosphan, Tributylphosphan, Tris-(trimethoxyphenyl)-phosphane, Bis-(trimethylphenyl)-phenylphosphane, Bis-(trimethoxyphenyl)-phenylphosphane, Trimethylphenyl-diphenylphosphane, Trimethoxyphenyldiphenylphosphane, Tris-(dimethylphenyl)-phenylphosphane, Tris-(dimethoxyphenyl)-phosphane, Bis-(dimethylphenyl)-phenylphosphane, Bis-(dimethoxyphenyl)-phenylphosphane, Dimethylphenyldiphenylphosphane, Dimethoxyphenyldiphenylphosphane, Triphenylarsan, Ditolylphenylarsan, Tris-(4-ethoxyphenyl)-arsan, Diphenylcyclohexylarsan, Dibutylphenylarsan und Diethylphenylarsan. Besonders bevorzugt sind Triarylphosphane, insbesondere Triphenylphosphan.

Weitere Beispiele für $L^2$-Liganden sind Bisphosphane der Formel

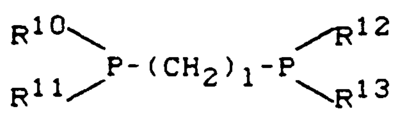 (IV)

in der l für eine ganze Zahl von 1 bis 10 steht und die Reste $R^{10}$, $R^{11}$, $R^{12}$, $R^{13}$ unabhängig voneinander die Bedeutung von $R^6$ haben.

Beispiele für Bisphosphane sind 1,2-Bis-diphenylphosphanoethan, 1,2-Bis-dianisylphosphanoethan, 1,3-Bisdiphenylphosphanopropan und 1,4-Bis-diphenylphosphanobutan. Bevorzugt ist 1,2-Bis-diphenylphosphanoethan, insbesondere 1,3-Bis-diphenylphosphanopropan und 1,4-Bis-diphenylphosphanobutan.

Die Definition der Verbindungen (I) soll im Sinne der Erfindung auch solche Verbindungen umfassen, deren $L^1$ und $L^2$ durch eine oder mehrere kovalente Bindungen untereinander verbunden sind. Beispiele für eine derartige Ausführungsform sind Verbindungen der Formel

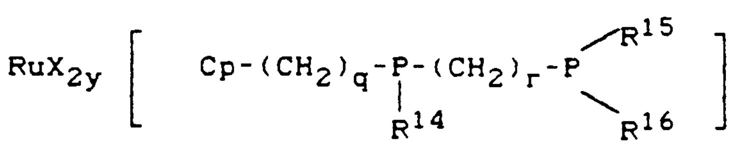 (V)

Cp: Cyclopentadienyl

worin q und r unabhängig voneinander eine ganze Zahl von 1 bis 6 bedeuten und die Reste $R^{14}$ bis $R^{16}$ unabhängig voneinander die Bedeutung von $R^6$ haben.

Beispiele solcher Liganden (V) sind 1,4-Diphospha-6-cyclopentadienyl-1,1,4-triphenylhexan, bevorzugt 1,5-Diphospha-7-cyclopentadienyl-1,1,5-triphenylheptan und insbesondere 1,6-Diphospha-8-cyclopentadienyl-1,1,6-triphenyloctan.

Die verwendeten Rutheniumkomplexe (I) sind größtenteils bekannt und können z.B. nach P. S. Hallmann, B. R. McGarvey und G. Wilkinson in J. Chem. Soc. (A), 1968, S. 3143 - 3150, M. I. Bruce, N. J. Windsor in Aust. J. Chem 30, (1977), S. 1601 - 1604, T. Kauffmann und J. Olbrich in Tetrahedron Letters 25, (1984), S. 1967 -1970, T. Wilczewsky, M. Bochenska und J. F. Biernat in J. Organomet. Chem 215, (1981), S. 87 - 96, R.W. Mitchell, A. Spencer und G. Wilkinson in J. Chem. Soc. Dalton 1973, S. 852, D. Rose, J. D. Gilbert, R. P. Richardson und G. Wilkinson in J. Chem. Soc. (A) 1969, S. 2914 - 2915, A. Dobson, S. D. Robinson und M. F. Uttley in J. Chem. Soc. Dalton 1975, S. 376, L. A. Oro, M. A. Ciriano, M. Campo, C. Foces-Foces und F.H. Cano in J. Organomet. Chem. 289 (1985) 117 - 131, DE-OS 33 37 294, R.

O. Harris, N. K. Hota, L. Sadavoy und M. J. C. Yuen in J. Organomet. Chem 54 (1973) 259 - 264, T. Blackmore, M. I. Bruce und F. G. A. Stoue in J. Chem. Soc., Section A 1971, S. 2376-2382, oder in analoger Weise, hergestellt werden.

Besonders bevorzugte Ruthenium-Komplexkatalysatoren der Formel (I) für das erfindungsgemäße Verfahren sind:

$RuCl_2 (PPh_3)_3$
$RuHCl (PPh_3)_3$
$RuH_2 (PPh_3)_4$
$RuH_4 (PPh_3)_3$
$RuH (CH_3COO) (PPh_3)_3$
$RuH (C_2H_5COO) (PPh_3)_3$
$RuH [(CH_3)_3C \cdot COO] (PPh_3)_3$
$Ru (CH_3 COO)_2 (PPh_3)_2$
$RuCl (Cp) (PPh_3)_2$
$RuH (Cp) (PPh_3)_2$
$Ru (SnCl_3) (Cp) (PPh_3)_2$
$RuCl (\eta^5\text{-}C_9H_7) (PPh_3)_2$
$RuH (\eta^5\text{-}C_9H_7) (PPh_3)_2$
$Ru (SnCl_3) (\eta^5\text{-}C_9H_7) (PPh_3)_2$
$RuCl (\eta^5\text{-}C_{13}H_9) (PPh_3)_2$
$RuH (\eta^5\text{-}C_{13}H_9) (PPh_3)_2$
$Ru (SnCl_3) (\eta^5\text{-}C_{13}H_9) (PPh_3)_2$
$RuCl (\eta^5\text{-}C_9H_7) (dppe)$

Dabei bedeuten "Ph" Phenyl, "Cp" Cyclopentadienyl und "dppe" 1,2-Bis-diphenylphosphanoethan.

Die Katalysatoren (I) sind bei Raumtemperatur (besser bei erhöhter Temperatur) in Ketonen in der Regel löslich. Genauer gesagt, lösen sich bei 20 °C von 3,4 g Katalysator in 2 l Butanon im allgemeinen mehr als 50 Gew.-%, bevorzugt mehr als 65 Gew.-%, insbesondere mehr als 80 Gew.-%.

Bevorzugte Lösungsmittelkomponenten a) sind beispielsweise Aceton, Butanon, Pentanone, Cyclopentanon und Cyclohexanon und deren Mischungen. Vorzugsweise wird nur ein einziges Keton als Lösungsmittelkomponente a) eingesetzt. Butanon und insbesondere Aceton sind bevorzugt.

Bevorzugte Lösungsmittelkomponenten b) sind beispielsweise 2-Propanol, 2-Butanol, 2-Methyl-2-propanol, 2- und 3-Pentanol, 3-Methyl-2-butanol, 2-Methyl-2-butanol, 2-, 3- und 4-Hexanol, 4-Methyl-2-pentanol. Bevorzugter Alkohol ist 2-Methyl-2-propanol, insbesondere 2-Butanol, ganz besonders bevorzugt ist 2-Propanol.

Für das erfindungsgemäße Verfahren einzusetzende nitrilgruppenhaltige olefinisch ungesättigte Polymere besitzt im allgemeinen als Zahlenmittel bestimmte mittlere Molekulargewichte $\overline{M}_n$ von 500 bis 500.000, vorzugsweise 5.000 bis 400.000 und insbesondere 10.000 bis 350.000 und speziell 15.000 bis 300.000. Die Molekulargewichte $\overline{M}_n$ können durch Gelpermeationschromatographie mit Polystyrol als Standard bestimmt werden.

Bevorzugte nitrilgruppenhaltige olefinisch ungesättigte Polymere umfassen Copolymerisate aus 90 bis 40 Gew.-%, bevorzugt 85 bis 50 Gew.-% mindestens einem konjugierten Dien, 10 bis 60 Gew.-%, vorzugsweise 15 bis 50 Gew.-% mindestens einem ungesättigten Nitril und 0 bis 10 Gew.-%, bevorzugt 0 bis 8 Gew.-% mindestens einem weiteren, mit konjugierten Dienen und ungesättigten Nitrilen copolymerisierbaren Monomeren.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomere kommen Vinylaromaten wie Styrol, o-, m- oder p-Methylstyrol, Ethylstyrol, Vinylnaphthalin und Vinylpyridin, $\alpha,\beta$-ungesättigte Monocarbonsäuren mit 3 bis 5 C-Atomen wie Acrylsäure, Methacrylsäure und Crotonsäure sowie $\alpha,\beta$-ungesättigte Dicarbonsäuren mit 4 bis 5 C-Atomen wie Malein-, Fumar-, Citracon- und Itaconsäure, ferner Vinylchlorid, Vinylidenchlorid, N-Methylolacrylamid und Vinyl-$C_1$-$C_4$-alkylether in Betracht.

Die bevorzugtesten nitrilgruppenhaltigen olefinisch ungesättigten Polymeren sind Nitrilkautschuke mit Glasübergangstemperaturen unter 0 °C, vorzugsweise unter -7 °C. Bevorzugte Nitrilkautschuke sind Butadien/Acrylnitril- Copolymerisate mit einem Gehalt an copolymerisiertem Acrylnitril von 10 bis 60, vorzugsweise 15 bis 50 Gew.- %. Sie besitzen in der Regel Mooney-Viskositäten (DIN 53 523), von 10 bis 150, vorzugsweise von 25 bis 95 (ML 1 + 4/100 °C).

Sowohl die als Ausgangsprodukte verwendeten nitrilgruppenhaltigen olefinisch ungesättigten Polymeren als auch die daraus hergestellten Hydrierungsprodukte sollten in dem verwendeten organischen Lösungsmittel löslich sein.

Unter ungünstigen Umständen, insbesondere bei hohen Polymerkonzentrationen in der Hydrierlösung bei hohen Molekulargewichten der Polymeren, bei hohen Alkoholanteilen am Lösungsmittel (ii) und bei tieferen Temperaturen, kann Entmischung zwischen Polymer und Lösungsmittel eintreten. Aus derartigen entmischten Systemen kann unter Rühren und gleichzeitiger Temperaturerhöhung meist wieder eine einphasige, gut handhabbare Mischung erhalten werden. Für diese Fälle gilt, daß - solange das Polymer im Lösungsmittel gut angequollen ist - darunter die Hydrierung meist nicht leidet.

Die Konzentration an Katalysator, bezogen auf Polymer (berechnet als Ruthenium), beträgt im allgemeinen 2 bis 500, vorzugsweise 4 bis 400 ppm, besonders bevorzugt 5 bis 300 ppm. Die Konzentration an ungesättigtem Polymer, bezogen auf die Gesamtlösung, beträgt im allgemeinen 1 bis 99, vorzugsweise 5 bis 40 Gew.-%.

Die Hydrierung wird zweckmäßigerweise bei 20 bis 250 °C, vorzugsweise bei 80 bis 200 °C, insbesondere bei 100 bis 180 °C, ganz besonders bevorzugt bei 120 bis 160 °C und bei 1 bis 350 bar, vorzugsweise bei 5 bis 250 bar, insbesondere bei 10 bis 200 bar Wasserstoffdruck durchgeführt.

Die Hydriergrade (Prozentsatz der hydrierten CC-Doppelbindungen, bezogen auf die Gesamtzahl der ursprünglich im Polymer vorhandenen GG-Doppelbindungen) können bis 100 % betragen. Die Hydrierung kann jedoch erforderlichenfalls vorher abgebrochen werden. Im allgemeinen werden Polymere mit Hydriergraden von über 80 %, vorzugsweise von über 90 %, insbesondere von über 95 % und ganz besonders bevorzugt von über 99 % hergestellt.

Der Hydriergrad der Polymeren kann mittels NMR- und IR-Spektroskopie bestimmt werden.

Nach der Hydierung können die Reaktionsprodukte mit Hilfe üblicher Methoden aus der Lösung abgetrennt werden. Übliche Methoden umfassen z.B. Eindampfen (gegebenenfalls unter verminderten Druck), Einblasen von Wasserdampf und Zugabe eines Fällungsmittels (Nichtlösungsmittels). Zur Entfernung von Restlösungsmittel oder Wasser kann sich eine Trocknung anschließen.

Die erfindungsgemäß hydrierten Polymeren sind in Lösungsmitteln wie z.B. Aceton, Butanon, Tetrahydrofuran, Dichlormethan, Trichlormethan und Chlorbenzol im allgemeinen löslich.

Sofern es sich bei den Hydrierungsprodukten um Kautschuke handelt, können sie in üblicher Weise durch Peroxid- oder Schwefelvulkanisation oder durch Strahlenvernetzung vulkanisiert werden.

Die erfindungsgemäß hydrierten Polymeren können - ausreichend hohe Molekulargewichte vorausgesetzt - zu Vulkanisaten mit ausgezeichneter Wetter-, Ozon-, Öl- und Heißluftbeständigkeit sowie einer guten Kälteflexibilität verarbeitet werden. Bevorzugte Einsatzgebiete dieser Vulkanisate sind z.B. Dichtungen, Schläuche, Zahn- und Antriebsriemen, Membranen, Kabelmäntel und Drehschwingungsdämpfer.

## Beispiele

Im nachfolgenden wurden als Stand der Technik einige Beispiele (Beispiele 1, 2, 5, 6, 14, 16) in Anlehnung an DE-OS 3 433 392, 3 529 252 und 3 540 918 als Vergleich aufgenommen.

Zur anwendungstechnischen Prüfung wurden die Polymeren durch Einblasen von Wasserdampf in die Reaktionsmischung gefällt, abgetrennt und anschließend im Vakuum zwischen 40 und 60 °C getrocknet.

Bei den Eigenschaften der im folgenden beschriebenen Polymeren sind [a] der Hydriergrad nach Isolierung des Polymeren (%, infrarotspektroskopisch bestimmt), [b] der Gelwert (Gew.-%, gemessen in Butanon), [c] die Mooney-Viskosität ML 1+4 (100 °C), [d] die Defo-Viskosität $V_{10}$ (Ns, 80 °C) (R. Koopmann, Kautschuk + Gummi, Kunststoffe 36, Nr 2, S. 108 ff (1983)) und [e] die Defo-Elastizität $DE_{30}$ (1/10 mm, 80 °C) (s. Lit. wie unter [d]). Zur Messung der Mooney-Viskosität wurden 150 g Polymer auf einem 350 mm breiten Laborwalzwerk (Kühlwassertemperatur 20 ° C, Walzenspalt 0,4 mm, Friktion 1 : 1,2, vordere Walze 20 U/min) zweimal durchgelassen Nach Ablagerung des Felles für mindestens 30 Minuten erfolgte die weitere Prüfung nach DIN 53 523, Teil 2 und 3.

Für die Messungen wurden die Normen DIN 53 502, 53 504, 53 505 und 53 517 (Normprobekörper 1) verwendet, wobei F die Zugfestigkeit, D die Bruchdehnung, $S_{100}$ bzw. $S_{200}$ den Spannungswert bei 100 bzw. 200 % Dehnung, $H_{23}$ die Harte Shore A bei 23 °C und DVR den Druckverformungsrest bei 150 °C/70 h bedeuten.

### Beispiel 1 (Vergleichsbeispiel)

Eine sorgfältig unter Ausschluß von Sauerstoff hergestellte Lösung von 2,1 kg eines statistisch aufgebauten Acrylnitril/Butadien-Emulsionspolymerisats (Acrylnitrilgehalt: 33,9 Gew.-%.; Mooney-Viskosität ML 1+4 (100 °C) von 28) in 17,9 kg Butanon wurde in einem mit Stickstoff inertisierten 40 l-Autoklaven vorgelegt. In Abwesenheit von Wasserstoff heizte man auf 125 °C auf, fügte eine ebenfalls unter Sauerstoffausschluß hergestellte Lösung von 3,327 g Tris(triphenylphosphan)-ruthenium-(II)-chlorid (167 ppm Ru, bezogen auf Polymer) in 1,6 kg Butanon hinzu und hydrierte 5 Stunden lang bei 135 °C und 140 bar Wasserstoffdruck. Die Produkteigenschaften (I) sind in Tabelle 1 zusammengefaßt.

Beispiel 2 (Vergleichsbeispiel)

Man verfuhr wie in Beispiel 1, hydrierte jedoch mit 1,693 g Katalysator (85 ppm Ru, bezogen auf Polymer). Nach 5 Stunden der Reaktion bei 135 °C und 140 bar Wasserstoffdruck lag der Hydriergrad bei 96,0 % und nach Abkühlung und Entspannung des Reaktors bei 97,5 % (jeweils IR-spektroskopisch bestimmt).

Beispiel 3

Eine sorgfältig unter Ausschluß von Sauerstoff hergestellte Lösung von 2,1 kg des gleichen Polymers wie in Beispiel 1 in 15,38 kg Butanon wurde in einem mit Stickstoff inertisierten 40 l-Autoklaven vorgelegt und mit 2,93 kg 2-Propanol, welches zuvor sorgfältig von gelöstem Sauerstoff befreit wurde, versetzt. Man heizte in Abwesenheit von Wasserstoff auf 125 °C auf, fügte eine ebenfalls sorgfältig unter Ausschluß von Sauerstoff hergestellte Lösung von 1,693 g Tris(triphenylphosphan)-ruthenium(II)-chlorid (85 ppm Ru, bezogen auf Polymer) in 1,6 kg Butanon hinzu und hydrierte 5 Stunden lang bei 135 °C und 140 bar Wasserstoffdruck. Die Produkteigenschaften sind in Tabelle 1 zusammengefaßt.

Beispiel 4

Aus den Polymeren, hergestellt nach Beispiel 1 und 3, wurden gemäß folgender Rezeptur Mischungen hergestellt:
100,00 Gew.-Teile hydriertes Polymer
3,00 Gew.-Teile Zinkoxid
(verwendet wurde ®Zinkoxyd aktiv der Bayer AG, Leverkusen)
2,00 Gew.-Teile Magnesiumoxid
(verwendet wurde ®Maglite DE der Merck & Co. Inc., USA)
1,00 Gew.-Teile octyliertes Diphenylamin
(verwendet wurde ®Vulkanox OCD der Bayer AG, Leverkusen)
0,50 Gew.-Teile Zinksalz des 2-Mercaptobenzimidazols
(verwendet wurde ®Vulkanox ZMB 2 der Bayer AG, Leverkusen)
45,00 Gew.-Teile Ruß N 326
(verwendet wurde ®Corax N 326 der Degussa AG, Wesseling)
3,00 Gew.-Teile Triallylisocyanurat
(verwendet wurde ®Perkalink 301-50 Dpd der Akzo-Chemie, Düren)
7,00 Gew.-Teile Bis(tertiärbutylperoxyisopropyl) benzol (40 %ig)
(verwendet wurde ®Perkadox 14/40 der Akzo-Chemie, Düren)
In Tabelle 1 sind die ermittelten Werte der Vulkanisate (II) aufgelistet. Die Vulkanisation wurde 15 Minuten bei 180 °C durchgeführt. Anschließend erfolgte eine Temperung während 6 Stunden bei 150 °C. Als Prüfkörper kam der S 2-Stab zum Einsatz.

Tabelle 1

| | | Beispiel 1 (Vergleich) | Beispiel 3 |
|---|---|---|---|
| (I) | [a] | 99,6 | 99,8 |
| | [b] | 1,0 | 0,5 |
| | [c] Null-Wert | 90 | 86 |
| | nach 3 Tagen Lagerung in Heißluft bei 100 °C | 124 | 98 |
| | [d] | 246 | 233 |
| | [e] | 43,4 | 42,9 |
| (II) | F (MPa) | 28,7 | 27,6 |
| | D [%] | 245 | 245 |
| | $S_{100}$ [MPa] | 4,4 | 4,0 |
| | $S_{200}$ [MPa] | 20,1 | 18,8 |
| | $H_{23}$ | 70 | 69 |
| | DVR [%] | 40,4 | 36,9 |

Aus Tabelle I geht hervor, daß das erfindungsgemäß hergestellte Produkt, verglichen mit dem Stand der Technik, ein Vulkanisat mit einem vorteilhafteren Druckverformungsrest liefert.

Beispiel 5 (Vergleichsbeispiel)

Eine sorgfältig unter Ausschluß von Sauerstoff hergestellte Lösung von 2,1 kg des gleichen Polymers wie im Beispiel 1 in 17,9 kg Aceton wurde in einem mit Stickstoff inertisiertem 40 l-Autoklaven vorgelegt. Man heizte in Abwesenheit von Wasserstoff auf 125 °C auf, fügte eine ebenfalls sorgfältig unter Ausschluß von Sauerstoff hergestellte Lösung von 3,984 g Tris(triphenylphosphan)ruthenium(II)-chlorid(200 ppm Ru, bezogen auf Polymer) in 1,6 kg Aceton hinzu und hydrierte 5 Stunden lang bei 135 °C und 140 bar Wasserstoffdruck. Die Produkteigenschaften (I) sind in Tabelle 2 zusammengefaßt.

Beispiel 6 (Vergleichsbeispiel)

Man verfuhr wie beim Beispiel 5, hydrierte jedoch mit 1,693 g Katalysator (85 ppm Ru, bezogen auf Polymer). Nach 5 Stunden der Reaktion bei 135 °C und 140 bar Wasserstoffdruck lag der Hydriergrad bei 93,4 % und nach Abkühlung und Entspannung des Reaktors bei 95,6 % (jeweils IR-spektroskopisch bestimmt).

Beispiel 7

Eine sorgfältig unter Ausschluß von Sauerstoff hergestellte Lösung von 2,1 kg des gleichen Polymers wie in Beispiel 1 in 15,38 kg Aceton wurde in einem mit Stickstoff inertisierten 40 l-Autoklaven vorgelegt und mit 2,93 kg 2-Propanol, welches zuvor sorgfältig von gelöstem Sauerstoff befreit wurde, versetzt. Man heizte in Abwesenheit von Wasserstoff auf 125 °C auf, fügte eine ebenfalls sorgfältig unter Ausschluß von Sauerstoff hergestellte Lösung von 1,693 g Tris(triphenylphosphan)-ruthenium(II)-chlorid (85 ppm Ru, bezogen auf Polymer) in 1,6 kg Aceton hinzu und hydrierte 5 Stunden lang bei 135 °C und 140 bar Wasserstoffdruck. Die Produkteigenschaften (I) sind in Tabelle 2 zusammengefaßt.

Beispiel 8

Aus den Polymeren, hergestellt nach den Beispielen 5 und 7, wurden entsprechend Beispiel 4 Vulkanisate hergestellt, deren Eigenschaften (II) in Tabelle 2 aufgelistet sind.

Tabelle 2

| | | Beispiel 5 (Vergleich) | Beispiel 7 |
|---|---|---|---|
| (I) | [a] | 99,4 | 99,4 |
| | [b] | 0,8 | 0,7 |
| | [c] Null-Wert | 82 | 79 |
| | nach 3 Tagen Lagerung in Heißluft bei 100 °C | 111 | 85 |
| | [d] | 198 | 188 |
| | [e] | 37,1 | 37,7 |
| (II) | F (MPa) | 28,0 | 29,5 |
| | D [%] | 240 | 260 |
| | $S_{100}$ [MPa] | 4,3 | 4,0 |
| | $S_{200}$ [MPa] | 19,7 | 18,5 |
| | $H_{23}$ | 69 | 70 |
| | DVR [%] | 41 | 35,8 |

Tabelle 2 zeigt, daß das erfindungsgemäß hergestellte Produkt, verglichen mit dem Stand der Technik, ein Vulkanisat mit einem günstigeren Druckverformungsrest ergibt.

Beispiel 9

Man arbeitete analog Beispiel 7. Unter konstantem Polymereinsatz (2,1 kg) und etwa konstanter Gesamtlösungsmittelmenge wurde die Zusammensetzung des Lösungsmittels Aceton/2-Propanol entsprechend Tabelle 3 variiert. Nach jeweils 5 Stunden Reaktionszeit bei 135 °C und 140 bar Wasserstoffdruck wurde dem Reaktor zur Analyse des Hydriergrades eine Probe entnommen, und man beendete dann die Hydrierung. Die Produkteigenschaften (I) sind Tabelle 4 zu entnehmen.

Beispiel 10

Aus den Polymeren von Beispiel 9 wurden entsprechend Beispiel 4 Vulkanisate hergestellt, deren Eigenschaften (II) in Tabelle 4 aufgelistet sind.

Tabelle 3

Einfluß der 2-Propanol-Konzentration im Lösungsmittel auf den Hydriergrad

| Beispiel-Nr. | 6 (Vergl.) | 9 | 7 | 9 | 9 |
|---|---|---|---|---|---|
| Lösungsmitteleinsatz ohne Berücksichtigung der Katalysatorlösung | | | | | |
| Aceton (kg) | 17,9 | 16,88 | 16,38 | 13,38 | 11,48 |
| 2-Propanol (kg) | 0,0 | 1,46 | 2,93 | 4,88 | 6,83 |
| 2-Propanol-Gehalt, bezogen auf Gesamtlösungsmittel (einschließlich Katalysatorlösung) (Gew.-%) | 0 | 7,3 | 14,7 | 24,6* | 34,3* |
| Hydriergrad nach 5 Stunden Reaktion bei 135°C/140 bar Wasserstoffdruck (%) | 93,4 | 97,8 | 98,9 | 99,3 | 99,6 |

*) Das dem Reaktor entnommene Reaktionsgemisch stellte keine einheitliche Phase dar.

Tabelle 4

| | | Beispiel | | | |
|---|---|---|---|---|---|
| | | 9 | 7 | 9 | 9 |
| 2-Propanol-Anteil am Gesamtlösungsmittel (Gew.-%) | | 7,3 | 14,7 | 24,6 | 34,3 |
| (I) | [a] | 98,8 | 99,4 | 99,3 | 99,8 |
| | [b] | 0,4 | 0,7 | 0,3 | 0,4 |
| | [c] Null-Wert | 78 | 79 | 79 | 82 |
| | nach 3 Tagen Lagerung in Heißluft bei 100 °C | 83 | 85 | 85 | 95 |
| | [d] | 169 | 188 | 175 | 191 |
| | [e] | 34,9 | 37,7 | 36,9 | 38,7 |
| (II) | F (MPa) | 28,7 | 29,5 | 26,4 | 28,7 |
| | D [%] | 245 | 260 | 235 | 245 |
| | $S_{100}$ [MPa] | 4,4 | 4,0 | 4,2 | 4,2 |
| | $S_{200}$ [MPa] | 20,0 | 18,5 | 19,3 | 19,5 |
| | $H_{23}$ | 70 | 70 | 69 | 69 |
| | DVR [%] | 36,6 | 35,8 | 37,3 | 37,5 |

Beispiel 11 (Vergleichsbeispiel)

Man arbeitete analog Beispiel 7, ersetzte jedoch 2-Propanol durch Methanol. Unter konstantem Polymereinsatz (2,1 kg) und etwa konstanter Gesamtlösungsmittelmenge wurde die Zusammensetzung des Lösungsmittels Aceton/Methanol entsprechend Tabelle 5 variiert. Nach jeweils 5 Stunden Reaktionszeit bei 135 °C und 140 bar Wasserstoffdruck wurde dem Reaktor zur IR-spektroskopischen Analyse des Hydriergrades eine Probe entnommen. Die Ergebnisse sind ebenfalls Tabelle 5 zu entnehmen. Danach verschlechtert Methanol als Lösungsmittelbestandteil den Hydriergrad signifikant.

Tabelle 5

Einfluß von Methanol im Lösungsmittel auf den Hydriergrad

| | Beispiel Nr. 6 (Vergl.) | 11 | 11 |
|---|---|---|---|
| Lösungsmitteleinsatz ohne Berücksichtigung der Katalysatorlösung | | | |
| Aceton (kg) | 17,9 | 16,88 | 15,38 |
| Methanol (kg) | 0,0 | 1,46 | 2,93 |
| Methanol-Gehalt, bezogen auf Gesamtlösungsmittel (einschl. Katalysatorlösung) (Gew.-%) | 0 | 7,3 | 14,7 |
| Hydriergrad nach 5 Stunden Reaktion bei 135° C/140 bar Wasserstoffdruck (%) | 93,4 | 57,9 | 56,1 |

Beispiel 12 (Vergleichsbeispiel)

Entsprechend Beispiel 11 wurden Hydrierungen mit Aceton/Ethanol-Gemischen durchgeführt. Die angewendeten Mischungsverhältnisse sowie die erlangten Hydriergrade sind in Tabelle 6 aufgelistet. Es ist ersichtlich, daß Ethanol-Zusätze den Hydriergrad verschlechtern.

Tabelle 6

Einfluß von Ethanol im Lösungsmittel auf den Hydriergrad

| | Beispiel Nr. 6 (Vergl.) | 12 | 12 |
|---|---|---|---|
| Lösungsmitteleinsatz ohne Berücksichtigung der Katalysatorlösung | | | |
| Aceton (kg) | 17,9 | 16,88 | 15,38 |
| Ethanol (kg) | 0,0 | 1,46 | 2,93 |
| Ethanol-Gehalt, bezogen auf Gesamtlösungsmittel einschl. Katalysatorlösung) (Gew.-%) | 0 | 7,3 | 14,7 |
| Hydriergrad nach 5 Stunden Reaktion bei 135° C/140 bar Wasserstoffdruck (%) | 93,4 | 40,2 | 40,6 |

Beispiel 13

Eine sorgfältig unter Ausschluß von Sauerstoff hergestellte Lösung von 2,1 kg des gleichen Polymers wie in Beispiel 1 in 15,39 kg Butanon wurde in einem mit Stickstoff inertisierten 40 l-Autoklaven vorgelegt und mit 3,0 kg 1-Propanol, welches zuvor sorgfältig von gelöstem Sauerstoff befreit wurde, versetzt. Man heizte in Abwesenheit von Wasserstoff auf 125 °C auf, fügte eine ebenfalls sorgfältig unter Ausschluß von Sauerstoff hergestellte Lösung von 1,693 g Tris(triphenylphosphan)-ruthenium(II)-chlorid (85 ppm Ru, bezogen auf Polymer) in 1,6 kg Butanon hinzu und hydrierte 5 Stunden lang bei 135 °C und 140 bar Wasserstoffdruck. Es wurden weitere Hydrierversuche durchgeführt, wobei 1-Propanol durch 1-Butanol, 2-Butanol und 2-Methyl-2-propanol ersetzt wurde.

Die ermittelten Hydriergrade nach jeweils 5 Stunden Reaktionszeit bei 135 °C und 140 bar Wasserstoffdruck sind Tabelle 7 zu entnehmen.

Tabelle 7

Einfluß verschiedener Alkohole im Lösungsmittel auf den Hydriergrad

| | Beispiel Nr. | | | | |
|---|---|---|---|---|---|
| | 2 Vergl. | 13 | 13 | 13 | 13 |
| Lösungsmitteleinsatz ohne Berücksichtigung der Katalysatorlösung | | | | | |
| Butanon (kg) | 17,9 | 15,39 | 15,39 | 15,39 | 15,39 |
| 1-Propanol (kg) | - | 3,0 | - | - | - |
| 1-Butanol (kg) | - | - | 3,0 | - | - |
| 2-Butanol (kg) | - | - | - | 3,0 | - |
| 2-Methyl-2-propanol (kg) | - | - | - | - | 3,0 |
| Alkohol-Gehalt, bezogen auf Gesamtlösungsmittel (einschließlich Katalysatorlösung) (Gew.-%) | 0 | 15,0 | 15,0 | 15,0 | 15,0 |
| Hydriergrad nach 5 Stunden Reaktion bei 135°C/140 bar Wasserstoffdruck (%) | 96,0 | 42,8 | 44,4 | 98,8 | 97,0 |

Beispiel 14 (Vergleichsbeispiel)

Eine sorgfältig unter Ausschluß von Sauerstoff hergestellte Lösung von 180 g eines statistisch aufgebauten Acrylnitril/Butadien-Emulsionscopolymerisats (Acrylnitrilgehalt: 34,8 Gew.-%, Mooney-Viskositat ML 1+4 (100°C) von 29) in 1451 g Butanon wurde in einem mit Stickstoff inertisierten 3 l-Autoklaven vorgelegt. In Abwesenheit von Wasserstoff heizte man auf 125°C auf, fügte eine ebenfalls unter Sauerstoffausschluß hergestellte Lösung von 143,5 mg RuH ($CH_3COO$) $(PPh_3)_3$ (85 ppm Ru, bezogen auf Polymer; Ph = Phenyl) in 162 g Butanon hinzu und hydrierte 5 Stunden lang bei 135°C und 140 bar Wasserstoffdruck. Sodann entnahm man zur Hydriergradbestimmung eine Probe. Der IR-spektroskopisch bestimmte Hydriergrad betrug 90,4 %.

Beispiel 15

Eine sorgfältig unter Ausschluß von Sauerstoff hergestellte Lösung von 180 g des gleichen Polymers wie in Beispiel 14 in 1210 g Butanon wurde in einem mit Stickstoff inertisierten 3 l-Autoklaven vorgelegt und mit 242 g 2-Propanol, welches zuvor sorgfältig von gelöstem Sauerstoff befreit wurde, versetzt. In Abwesenheit von Wasserstoff heizte man auf 125 °C auf, fügte eine ebenfalls unter Sauerstoffausschluß hergestellte Lösung von 143,5 mg RuH $(CH_3COO)$ $(PPh_3)_3$ (85 ppm Ru, bezogen auf Polymer; Ph = Phenyl) in 162 g Butanon hinzu und hydrierte 5 Stunden lang bei 135 °C und 140 bar Wasserstoffdruck. Der an einer dem Reaktor entnommenen Probe IR-spektroskopisch bestimmte Hydriergrad betrug 99,2 %.

Beispiel 16 (Vergleichsbeispiel)

Man arbeitete analog Beispiel 14. Als Katalysator kamen jedoch 173,4 mg $RuH_2$ $(PPh_3)_4$ (85 ppm Ru, bezogen auf Polymer; Ph = Phenyl). Der Hydriergrad betrug 72,1 %. (IR-spektroskopisch bestimmt).

Beispiel 17

Man arbeitete analog Beispiel 15. Als Katalysator wurden jedoch 173,4 mg $RuH_2$ $(PPh_3)_4$ (85 ppm Ru, bezogen auf Polymer; Ph = Phenyl) eingesetzt. Der Hydriergrad wurde mittels IR-Spektroskopie zu 98,4 % bestimmt.

Bei sämtlichen erfindungsgemäß durchgeführten Beispielen konnte IR-spektroskopisch an den erhaltenen Produkten eine Hydrierung der Nitrilgruppen nicht festgestellt werden.

**Patentansprüche**

**1.** Verfahren zur selektiven Hydrierung nitrilgruppenhaltiger olefinisch ungesättigter Polymerer mit Wasserstoff in Gegenwart von Hydrierkatalysator in organischem Lösungsmittel,
dadurch gekennzeichnet, daß man
(i) als Hydrierkatalysator eine Rutheniumverbindung der Formel

$RuX_{2y}\,[(L^1)_n\,(L^2)_{5-z}]$ (I)

worin
X Wasserstoff, Halogen, $SnCl_3$,
$L^1$ Wasserstoff, Halogen, $(R^6\text{-COO})_n$ und Cyclopentadienyl der Formel

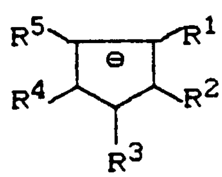

in der $R^1$ bis $R^5$ unabhängig voneinander für Wasserstoff, Methyl, Ethyl oder Phenyl stehen, wobei auch benachbarte Substituenten gemeinsam einen Kohlenwasserstoffrest derart bilden können, daß $L^1$ ein Indenyl- oder Fluorenylsystem ist,
$L^2$ ein Phosphan, Bisphosphan oder Arsan und
y Null, 0,5 oder 1,
n 1 oder 2,
z eine ganze Zahl von 1 bis 4,
$R^6$ Alkyl, Cycloalkyl, Aryl oder Aralkyl mit 1 bis 20 C-Atomen
bedeuten, und
(ii) als Lösungsmittel eine Mischung aus
a) $C_3$-$C_6$-Keton und

b) einwertigem sekundärem oder tertiärem $C_3$-$C_6$-Alkohol verwendet, wobei der Gewichtsanteil von b) am Lösungsmittel (ii) 2 bis 60 % beträgt.

## Claims

**1.** A process for the selective hydrogenation of olefinically unsaturated polymers containing nitrile groups with hydrogen in the presence of a hydrogenation catalyst in an organic solvent,
characterized in that
(i) a ruthenium compound corresponding to the following formula:

$RuX_{2y} [(L^1)_n (L^2)_{5-z}]$ (I)

in which
X is hydrogen, halogen, $SnCl_3$,
$L^1$ is hydrogen, halogen, $(R^6\text{-COO})_n$ and cyclopentadienyl corresponding to the formula:

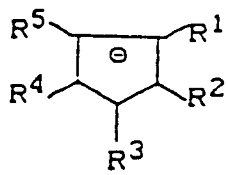

in which $R^1$ to $R^5$ independently of one another represent hydrogen, methyl, ethyl or phenyl; adjacent substituents together may even form a hydrocarbon radical so that $L^1$ is an indenyl or fluorenyl system, $L^2$ is a phosphane, bisphosphane or arsane and
y = 0, 0.5 or 1,
n = 1 or 2,
z = integer of 1 to 4,
$R^6$ is alkyl, cycloalkyl, aryl or $C_{1-20}$ aralkyl,
and
(ii) a mixture of
a) $C_{3-6}$ ketone and
b) monohydric secondary or tertiary $C_{3-6}$ alcohol is used as the solvent, the percentage by weight of b) in the solvent (ii) being 2 to 60%.

## Revendications

**1.** Procédé d'hydrogénation sélective de polymères à non-saturation oléfinique contenant des groupes nitrile, avec de l'hydrogène en présence d'un catalyseur d'hydrogénation dans un solvant organique,
caractérisé en ce qu'on utilise
(i) comme catalyseur d'hydrogénation, un composé de ruthénium de formule

$RuX_{2y} [(L^1)_n (L^2)_{5-z}]$ (I)

dans laquelle
X représente de l'hydrogène, un halogène, un groupe $SnCl_3$,
$L^1$ est de l'hydrogène, un halogène, un groupe $(R^6\text{-COO})_n$ et un groupe cyclopentadiényle de formule

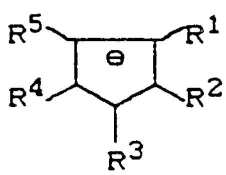

dans laquelle $R^1$ à $R^5$ représentent, indépendamment les uns des autres, de l'hydrogène, un groupe méthyle, éthyle ou phényle, des substituants voisins pouvant aussi former conjointement un reste hydrocarboné de telle sorte que $L^1$ représente un système indényle ou fluorényle,

$L^2$ est un phosphane, un bisphosphane ou un arsane et

y est égal à 0, 0,5 ou à 1,

n a la valeur 1 ou 2,

z est un nombre entier de 1 à 4,

$R^6$ est un groupe alkyle, cycloalkyle, aryle ou aralkyle ayant 1 à 20 atomes de carbone,

et

(ii) comme solvant, un mélange

a) d'une cétone en $C_3$ à $C_6$ et

b) d'un alcool monovalent secondaire ou tertiaire en $C_3$ à $C_6$, la proportion en poids de b) par rapport au solvant (ii) s'élevant à 2-60 %.